# EUROPÄISCHE PATENTSCHRIFT

(11) **EP 3 004 684 B1**
(45) Veröffentlichungstag und Bekanntmachung des Hinweises auf die Patenterteilung: **15.01.2020**
(21) Anmeldenummer: 14720161.0
(22) Anmeldetag: 30.04.2014
(51) Int. Cl.: F16F 13/28, F16F 13/14

(54) **HYDRAULISCH DÄMPFENDES GUMMILAGER**
HYDRAULICALLY-DAMPING RUBBER BEARING
SUPPORT EN CAOUTCHOUC D'AMORTISSEMENT HYDRAULIQUE

(30) Priorität: 29.05.2013 DE 102013209990
(43) Veröffentlichungstag der Anmeldung: 13.04.2016
(73) Patentinhaber: BOGE Elastmetall GmbH, 49401 Damme (DE); Audi AG, 85045 Ingolstadt (DE)
(72) Erfinder: LUDWIG, Volker, 26197 Großenkneten (DE); LOHEIDE, Stefan, 49134 Wallenhorst (DE); CONRAD, Thomas, 91757 Treuchtlingen (DE); UNGER, Wolfgang, 85080 Gaimersheim (DE)
(74) Vertreter: Bossmeyer, Jörg Peter
(86) Internationale Anmeldenummer: PCT/EP2014/058863
(87) Internationale Veröffentlichungsnummer: WO 2014/191150

(56) Entgegenhaltungen:
- EP-A1- 0 421 052
- EP-A1- 0 460 278
- JP-A- H02 245 538

## Beschreibung

Die Erfindung betrifft ein hydraulisch dämpfendes Gummilager gemäß dem Oberbegriff des Anspruchs 1.

Hydraulisch dämpfende Gummilager werden im Stand der Technik zur gedämpften Lagerung von Bauteilen eines Kraftfahrzeugs, wie beispielsweise eines Führungslenkers einer Vorderachse eines Kraftfahrzeugs, eingesetzt.

Mit zunehmenden Komfortanforderungen wächst die Bedeutung der Dämpfung von in einem Kraftfahrzeug entstehenden Schwingungen beziehungsweise äußerer Schwingungen, die beispielsweise von der Fahrbahn auf das Fahrzeug übertragen werden. Dies ist insbesondere wegen der erforderlichen Reduzierung des Geräuschpegels im Innenraum und der Verminderung von Vibrationen, die als unangenehm wahrgenommen werden, von Bedeutung. Wegen der positiven Federungs- und Dämpfungseigenschaften von Elastomerwerkstoffen kommen vermehrt Elastomerlager - vorliegend auch als Gummilager bezeichnet - zum Einsatz, um beispielsweise das Antriebsaggregat oder bewegliche Bauteile im Kraftfahrzeug zu lagern. Wesentlichen Einfluss auf die Qualität und die Dämpfungseigenschaften hat die spezifische Zusammensetzung des Elastomers. Durch eine Änderung der Stoffzusammensetzung des Elastomers können Härte und Elastizität der Lager entscheidend beeinflusst werden. Eine Grenze ist dieser Variabilität jedoch dort gesetzt, wo hohe Schwingungsamplituden gedämpft werden müssen. Diese entstehen beispielsweise, wenn das Antriebsaggregat sich im Leerlauf befindet oder wenn auf das Fahrwerk auf unebener Fahrbahn periodisch und stoßartig Bewegungen einwirken. Diese so genannten Resonanzschwingungen zu dämpfen, ist mit herkömmlichen Elastomerlagern nur eingeschränkt möglich. Da aber gerade Resonanzschwingungen als sehr störend und sehr unangenehm im Fahrzeug empfunden werden und darüber hinaus Beschädigungen an kostenintensiven Bauteilen herbeiführen können, setzten sich in modernen Kraftfahrzeugen verstärkt hydraulisch dämpfende Elastomerlager durch. Diese verfügen über zumindest zwei voneinander getrennte Kammern, in denen eine Dämpfungsflüssigkeit (Fluid) enthalten ist. Die Kammern sind über einen Strömungskanal miteinander verbunden und werden bei einer auf das Elastomerlager einwirkenden äußeren Kraft verformt, so dass Dämpfungsflüssigkeit von der einen in die andere Kammer übertreten kann. Die Kammerwände setzen der Formänderung einen Widerstand entgegen, der zu einer Druckänderung in den Kammern führt. Ein Maß für diese Druckänderung durch die somit entstehende Volumenverdrängung wird als "Beulfederrate" bezeichnet. Um den Druckunterschied zwischen den Kammern auszugleichen, sind die Kammern über den bereits erwähnten Strömungskanal miteinander verbunden. Beim Einfedern mit niedrigen Frequenzen erfolgt ein Druckausgleich zwischen den Kammern ausschließlich über diesen Strömungskanal. Daraus ergibt sich, dass hierbei der Elastomerkörper maßgeblich zur Federung und Dämpfung des Elastomerlagers beiträgt. Mit zunehmender Frequenz gewinnt jedoch ein schwingungsfähiges, gedämpftes System an Bedeutung, das aus den elastischen Kammerwänden und der Masse der sich im Strömungskanal befindenden Dämpfungsflüssigkeit besteht. Wird ein Elastomerlager mit hydraulischer Dämpfung im Bereich einer Resonanzfrequenz angeregt, ändert sich die Dämpfung und damit ändern sich die elastischen Eigenschaften des Elastomerlagers insgesamt. Oberhalb der Resonanzfrequenz verhindern schließlich die Trägheit der Flüssigkeitsmenge im Strömungskanal und die Reibung einen weiteren Druckausgleich zwischen den Kammern. Dadurch unterstützt die Steifigkeit der Kammerwände die Trägersteifigkeit und bewirkt eine Erhöhung der Gesamtsteifigkeit im Vergleich zum niederfrequenten Lastfall.

Die Dämpfungswirkung gattungsgemäßer Gummilager basiert demnach auf dem Prinzip einer viskosen Reibungsdämpfung, die durch einen Fluidaustausch zwischen zumindest zwei fluidtechnisch verbundenen Fluidkammern innerhalb eines betreffenden Verbindungskanals, der als Strömungsverbindung fungiert, erzielt wird. Dabei wird in Abhängigkeit von der Belastung des Gummilagers zwischen den zumindest zwei Fluidkammern ein Fluidvolumen ausgetauscht, wodurch eine Dämpfung des Lagers erreicht wird, da das zwischen den Fluidkammern verschiebbare Fluidvolumen aufgrund seiner Massenträgheit und aufgrund des Fluidwiderstands in einem für den Fluidaustausch erforderlichen Strömungskanals eine Dämpfungswirkung ausübt. Die (Frequenz-)Lage des Dämpfungsmaximums hängt dabei von dem Kanal- oder Drosselquerschnitt bzw. der Kanal- oder Drossellänge des Verbindungs- bzw. Strömungskanals zwischen den Fluidkammern und von der Ausgestaltung der Beulfedern (Wirkfläche und Volumennachgiebigkeit) ab.

Die EP 0 460 278 A1 offenbart ein Gummilager für einen Kolbenmotor, bei dem zwei flüssigkeitsgefüllte Arbeitsräume vorgesehen sind, die durch elastisch aufblähbare Begrenzungswände begrenzt und durch wenigstens zwei parallel geschaltete Verbindungsöffnungen verbunden sind, wobei die Verbindungsöffnungen eine Dämpfungsöffnung umfassen, die durch ein Ventil willkürlich verschließbar ist. Die Dämpfungsöffnung ist kanalartig gestaltet und so dimensioniert, dass die umschlossene Flüssigkeitsmasse bei Erreichen der Leerlaufdrehzahl des Kolbenmotors in eine gleichphasig mit diesem schwingende Relativbewegung einer Amplitude gelangt, die größer ist als die Amplitude der Bewegungen des Kolbenmotors, multipliziert mit dem Verhältnis aus dem Verdrängungsquerschnitt der Blähfedern und dem Querschnitt der Dämpfungsöffnung.

Die EP 0 421 052 A1 beschreibt eine hydraulisch gedämpfte Hülsengummifeder, umfassend ein Außen- und ein Innenrohr, die durch einen gummielastischen Federkörper aufeinander abgestützt sind, wobei in dem Federkörper wenigstens zwei flüssigkeitsgefüllte Kammerpaarungen aus zwei in Bewegungsrichtung einen Abstand aufweisenden Kammern vorgesehen sind, und wobei die Kammern einer jeden Kammerpaarung durch eine Dämpfungsöffnung verbunden und mit Flüssigkeit gefüllt sind. Die Dämpfungsöffnungen sind jeweils so dimensioniert und an die summierten Ausbauchungselastizitäten der beiderseits angrenzenden Kammern der Kammerpaarungen angepasst, dass die enthaltenen Flüssigkeitsmassen bei einer voneinander abweichenden Frequenz der eingeleiteten Schwingungen in eine Resonanzbewegung gelangen.

Um bestimmten Anforderungen gerecht zu werden, ist es beispielsweise aus der DE 102 13 627 A1 bekannt, eine Strömungsverbindung zwischen zwei Fluidkammern vorzusehen, die aus mindestens zwei Einzelverbindungen besteht, von denen mindestens eine Einzelverbindung zu- bzw. abschaltbar ist.

Derartige schaltbare Gummilager sind somit in der Lage, einen Fluidaustausch zwischen den Fluidkammern zu unterbinden, wodurch die Steifigkeit der Anordnung erhöht wird. Eine Volumennachgiebigkeit wird dann nur noch über das Gummimaterial des Lagers selbst, d. h. über die Kammerwände der Fluidkammern realisiert.

Zudem wird bei den vorbekannten Konfigurationen von schaltbaren Gummilagern die schaltbare Hydraulikverbindung lediglich in der Fahrzeugquerrichtung vorgesehen, während eine zusätzliche Dämpfungswirkung in der Fahrzeuglängsrichtung in der Form einer nicht schaltbaren hydraulischen Verbindung bereitgestellt wird. Eine wahlweise variable Steifigkeit in der Hauptdämpfungsrichtung (Fahrzeuglängsrichtung) ist bei den bisher bekannten Gummilagern nicht realisiert.

Daher ist es Aufgabe der vorliegenden Erfindung, ein Gummilager vorzusehen, mittels welchem wahlweise unterschiedliche Steifigkeiten in der Hauptdämpfungsrichtung ermöglicht werden.

Diese Aufgabe wird durch ein Gummilager mit den Merkmalen gemäß Anspruch 1 gelöst. Bevorzugte Ausführungsformen der Erfindung sind in den abhängigen Ansprüchen definiert.

Es wird gemäß der Erfindung ein hydraulisch dämpfendes Gummilager bereitgestellt, welches ein im Wesentlichen hohlzylindrisches Innenteil und ein in einem vorbestimmten Abstand dazu angeordnetes Außenteil umfasst, wobei das Innenteil und das Außenteil über ein zwischen dem Innenteil und dem Außenteil angeordnetes elastisches Verbindungsteil (Gummiverbindungsteil) verbunden sind, wobei das Gummilager einen ersten hydraulischen Dämpfungskreislauf mit zumindest zwei über eine erste Strömungsverbindung in Fluidkommunikation stehenden ersten Fluidkammern mit einer Dämpfungswirkung in einer vorbestimmten Richtung aufweist, und wobei das Gummilager einen zweiten hydraulischen Dämpfungskreislauf aufweist, welcher eine Dämpfungswirkung in derselben Richtung wie der erste hydraulische Dämpfungskreislauf vorsieht. Bei der erfindungsgemäßen Konfiguration sind somit von den ersten Fluidkammern komplett getrennte zweite Fluidkammern vorgesehen, die in der vorbestimmten Dämpfungsrichtung, welche vorzugsweise die Hauptdämpfungsrichtung sein kann, mit den ersten Fluidkammern gemeinsam dämpfend wirksam sind. Durch Vorsehen des ersten und des zweiten hydraulischen Dämpfungskreislaufs, deren Dämpfungswirkung folglich in derselben Richtung liegt, kann eine Steifigkeitsschaltung unter Beibehaltung der Resonanzlage und des Verlustwinkels geschaffen werden, welche wahlweise unterschiedliche Steifigkeiten in der genannten einen vorbestimmten Dämpfungsrichtung, insbesondere der Hauptdämpfungsrichtung, ermöglicht. Das betreffende Kammervolumen und die Volumennachgiebigkeit bzw. die Wirkfläche sind vorzugsweise so gewählt, dass weder die Resonanzlage noch das Dämpfungsmaximum wesentlich verändert werden.

Alternativ können erster und zweiter Dämpfungskreislauf ohne Beschränkung auch als Hydrolagerkanal bzw. als Kanal der Steifigkeitsschaltung (Arbeitskanal) bezeichnet werden.

Gemäß einer bevorzugten Ausführungsform ist der erste hydraulische Dämpfungskreislauf in einer Mantelfläche des Gummilagers, insbesondere in einer Mantelfläche des Außenteils, und/oder in einem Gehäuse, in welchem das Gummilager aufgenommen ist, ausgebildet bzw. über das Gehäuse und dort vorgesehene Strömungskanäle geschlossen. Auch der zweite hydraulische Dämpfungskreislauf kann in der Mantelfläche des Gummilagers, insbesondere in der Mantelfläche des Außenteils, und/ oder in dem Gehäuse ausgebildet bzw. über dieses geschlossen sein. Auf diese Weise ergeben sich vielfältige Ausgestaltungsmöglichkeiten für die geometrische Ausbildung und Anordnung der beiden Dämpfungskreisläufe. Insbesondere ist es auf diese Weise leicht möglich, das hydraulisch dämpfende Gummilager gemäß einer Weiterbildung der Erfindung im Hinblick auf die beiden Dämpfungskreisläufe mit unterschiedlichen Frequenzen (Frequenzlagen) der jeweiligen maximalen Dämpfungswirkung und/oder mit unterschiedlichen Frequenzabhängigkeiten der Dämpfungswirkung auszustatten. Außerdem kann vorgesehen sein, dass der erste Dämpfungskreislauf und der zweite Dämpfungskreislauf unterschiedliche Fluidwiderstände aufweisen. Dies lässt sich beispielsweise durch unterschiedliche Strömungsweglängen und/oder unterschiedliche Querschnittswerte bzw. -geometrien erreichen. Beispielsweise kann einer der beiden Dämpfungskreisläufe bzw. der entsprechende Strömungskanal relativ lang und mit relativ geringem Querschnitt, d. h. entsprechend großem Fluidwiderstand ausgebildet sein, während der andere Dämpfungskreislauf bzw. Strömungskanal relativ kurz und mit relativ großem Strömungsquerschnitt, d. h. entsprechend geringem Fluidwiderstand ausgebildet ist.

Gemäß einer weiteren bevorzugten Ausführungsform ist einer von den ersten und zweiten hydraulischen Dämpfungskreisläufen, insbesondere der zweite hydraulische Dämpfungskreislauf, schaltbar, wobei der andere von den ersten und zweiten hydraulischen Dämpfungskreisläufen dabei in seiner Dämpfungswirkung im Wesentlichen unbeeinflusst bleibt, insbesondere hinsichtlich der Frequenzabhängigkeit der Dämpfungswirkung, d. h. insbesondere der Lage des Dämpfungsmaximums. Dies kann durch entsprechende Abmessungen und/oder Geometrien insbesondere der zumindest teilweise in einem elastischen Material (Gummi) ausgebildeten Trennwände zwischen den Fluidkammern der beiden hydraulischen Dämpfungskreisläufe und aber auch über die Dimensionierung von im Bereich der Fluidkammern vorhandenen Lager eines Käfigs des Außenteils realisiert werden, so dass beispielsweise auch bei steif geschaltetem zweiten hydraulischen Dämpfungskreislauf und dessen Rückwirkung auf den ersten hydraulischen Dämpfungskreislauf über dazwischen befindliche (teil-)elastische Trennwände sich die Frequenzabhängigkeit der Dämpfungswirkung im Wesentlichen nicht verändert. Somit ist das Gummilager gemäß dieser Ausführungsform in der Lage, trotz schaltbarer Steifigkeit wenigstens eines Dämpfungskreislaufs in einer vorbestimmten Richtung dafür Sorge zu tragen, dass eine bestimmte erwünschte Dämpfungswirkung in derselben Richtung, nämlich die durch den anderen Dämpfungskreislauf erreichte Dämpfungswirkung, nicht wesentlich verändert wird, insbesondere hinsichtlich der Frequenzabhängigkeit.

Vorzugsweise weisen der erste hydraulische Dämpfungskreislauf und der zweite hydraulische Dämpfungskreislauf unterschiedliche Dämpfungsfrequenzen auf, wodurch das Dämpfungsspektrum erhöht wird.

Darüber hinaus weist gemäß der Erfindung der zweite hydraulische Dämpfungskreislauf zumindest zwei zweite Fluidkammern (Schaltkammern) auf, welche über eine zweite Strömungsverbindung (Verbindungskanal) in Fluidkommunikation stehen. Diese separate zweite Strömungsverbindung ist beispielsweise mittels eines schaltbaren Ventils versperrbar oder blockierbar, wobei durch das Blockieren der Flüssigkeitsbewegung zwischen den entsprechenden Fluidkammern nach Art einer Steifigkeitsschaltung eine Anhebung der Gesamtsteifigkeit des Gummilagers erreicht wird. Durch das schaltbare Ventil lassen sich folglich die Schaltkammern des zweiten Dämpfungskreislaufs fluidtechnisch separieren, um die Lagersteifigkeit gezielt zu beeinflussen.

Vorzugsweise sind die zweiten Fluidkammern mit einem U-förmigen Querschnitt ausgebildet; auch die ersten Fluidkammern können einen im Wesentlichen U-förmigen Querschnitt aufweisen. Gemäß einer besonderen Ausführungsform der vorliegenden Erfindung können insbesondere die Fluidkammern des zweiten Dämpfungskreislaufs zumindest abschnittsweise einen fast perfekt U-förmigen Querschnitt mit konkav gerundetem, mittlerem Verbindungsschenkel aufweisen. Dabei ist vorzugsweise der genannte abgeordnete Verbindungsschenkel vollständig in dem elastischen Material (Gummi) des Verbindungsteils ausgebildet. Dagegen können die Fluidkammern des ersten Dämpfungskreislaufes zumindest abschnittsweise eine abgewandelte U-Form (V-Form) aufweisen, wobei der mittlere Verbindungsschenkel eine zum Teil konvex abgerundete, d. h. in das U hinein vorgewölbte Kontur aufweist. Auch hierbei ist vorzugsweise der mittlere Verbindungsschenkel im Wesentlichen vollständig in dem elastischen Material des Verbindungsteils ausgebildet. Die Formgebung und/oder Wandstärke der genannten Verbindungsschenkel kann so gewählt sein, dass bei Steifschaltung des einen Dämpfungskreislaufs im Wesentlichen keine Beeinflussung der Dämpfungswirkung des anderen Dämpfungskreislaufs resultiert, wie gewünscht.

Gemäß der Erfindung sind die zumindest zwei zweiten Fluidkammern an der Mantelfläche des Gummilagers zwischen den zumindest zwei, insbesondere vier, ersten Fluidkammern angeordnet. Somit entsprechen die zweiten Fluidkammern inneren Fluidkammern und die ersten Fluidkammern äußeren Fluidkammern, bezogen auf eine Längsrichtung der gesamten Gummilager-Anordnung.

Vorzugsweise weist das Innenteil einen hohlzylindrischen Kern aus Metall auf, welcher von einer Gummischicht umgeben ist, welche Gummischicht das erwähnte Verbindungsteil mit ausbildet. Der Kern selbst dient zum Verbinden des Gummilagers mit einem zu bedämpfenden Bauteil, beispielsweise einer Fahrwerks- oder Karosseriekomponente eines Kraftfahrzeugs, welche innerhalb des Hohlzylinders befestigt sein kann. Vorzugsweise ist das Innenteil an die Karosse geschraubt, und das Außenteil ist in einen Lenker gepresst.

Vorzugsweise weist das Außenteil einen so genannten Käfig aus Metall oder Kunststoff oder aus einem anderen geeigneten Material auf, welcher von einer Gummischicht umgeben ist, die ebenfalls das erwähnte Verbindungsteil mit ausbildet. Der genannte Metallkäfig dient der Stabilität der aus dem elastischen Material des Verbindungsteils gebildeten Fluidkammerwände, verhindert ein Umklappen derselben bei Einwirkung von Fluiddruck und ermöglicht dadurch eine sichere Abdichtung der Fluidkammern der Dämpfungskreisläufe gegeneinander.

Gemäß einer weiteren bevorzugten Ausführungsform bilden einzelne Elemente des Käfigs abschnittsweise Versteifungen für die ersten und zweiten Fluidkammern, was die zuvor bereits genannten Vorteile hinsichtlich der Stabilität mit sich bringt. Gemäß noch einer weiteren bevorzugten Ausführungsform ist der Käfig einteilig bzw. einstückig ausgebildet, was den Herstellungsprozess vereinfacht und somit die Herstellungskosten verringert. Der Käfig kann jedoch auch geteilt ausgebildet sein, wie z.B. in der DE 10 2012 213 440 beschrieben.

Im Zuge einer bevorzugten Ausgestaltung des erfindungsgemäßen Gummilagers resultiert demnach folgende Arbeitsweise: Bei fluidtechnisch verbundenen Fluidkammern des zweiten Dämpfungskreislaufs ("weicher" Schaltzustand) wird in dem ersten Dämpfungskreislauf Fluid bei radialer Bewegung des Lagers über die betreffende Strömungsverbindung (Arbeitskanal) aus den Fluidkammern auf einer Seite des Lagers in die Fluidkammern auf der anderen Seite des Lagers gedrückt, was eine Dämpfungswirkung hervorruft. Im zweiten Dämpfungskreislauf wird gleichzeitig ebenfalls Fluid über die freie Strömungsverbindung von der einen Seite (Schaltkammer) in die entsprechende Schaltkammer auf der gegenüberliegenden Seite gedrückt. Das Fluidvolumen im zweiten Dämpfungskreislauf (zuweilen auch als "Schaltpaket" bezeichnet) geht vorzugsweise erst bei höheren Frequenzen in Resonanz als das "Arbeitspaket" (Fluidvolumen im ersten Dämpfungskreislauf). Dadurch bleibt eine Trennwand zwischen dem ersten Dämpfungskreislauf und dem zweiten Dämpfungskreislauf "weich". Das entsprechende "Gummipaket" der Trennwand weist also Nachgiebigkeiten auf und hat Anteil am schwingungsfähigen Gesamtsystem.

Im "harten" Schaltzustand, d.h. bei separierten Schaltkammern im zweiten Dämpfungskreislauf ist das Fluid im zweiten Dämpfungskreislauf blockiert. Das genannte Gummipaket hat durch den Gegendruck des Fluids in den blockierten Schaltkammern keine oder kaum Nachgiebigkeiten und somit keinen Anteil am schwingungsfähigen System.

Wie eingangs ausgeführt, kommt es im Betrieb des Gummilagers, d. h. bei Bewegungen desselben - insbesondere im "weichen" Zustand - durch Reibungseffekte bei der Fluidbewegung innerhalb der Strömungsverbindung (Kanal) in den Fluidkammern zu einer Art "Fluidstau", vor allem jenseits der Resonanzfrequenz. Dies erhöht den Druck in den Fluidkammern, woraufhin die flexiblen Kammerwände diesem Druck nachgeben. Das Maß dieses Nachgebens bestimmt zusammen mit den Kanalabmessungen und der Fläche einer auf diese Weise realisierten "Beulfeder" die Lage der Resonanzfrequenz und den maximalen Verlustwinkel.

Vorliegend kann - bei entsprechender Ausgestaltung - der geschlossene Zustand der Schaltkammern, d. h. der Fluidkammern des zweiten Dämpfungskreislaufs über den zugehörigen Fluiddruck die "normale" Bewegung der Beulfeder, wie sie sich im "weichen" Schaltzustand ergibt, beeinflussen bzw. behindern. Dies entspricht einer Verringerung der Volumennachgiebigkeit, wodurch sich auch die Fläche der Beulfeder ändert. Vorzugsweise ist das System bei entsprechender Ausgestaltung der Erfindung so ausgelegt, dass die beiden vorstehend genannten Effekte in der Summe - gemeinsam mit dem unverändert gebliebenen Kanal (Strömungsverbindung) - ein ähnliches dynamisches Verhalten / im Wesentlichen unverändertes dynamisches (Dämpfungs-)Verhalten des Gummilagers bewirken.

Im Nachfolgenden werden Ausführungsformen der Erfindung unter Bezugnahme auf die beigefügte Zeichnung näher beschrieben. Es zeigen:
- Fig. 1: eine isometrische Ansicht eines Gummilagers gemäß einer Ausführungsform;
- Fig. 2: eine Schnittansicht des in Fig. 1 dargestellten Gummilagers;
- Fig. 3A - 3E: verschiedene weitere Ansichten eines Außenteils eines Gummilagers gemäß einer Ausführungsform.

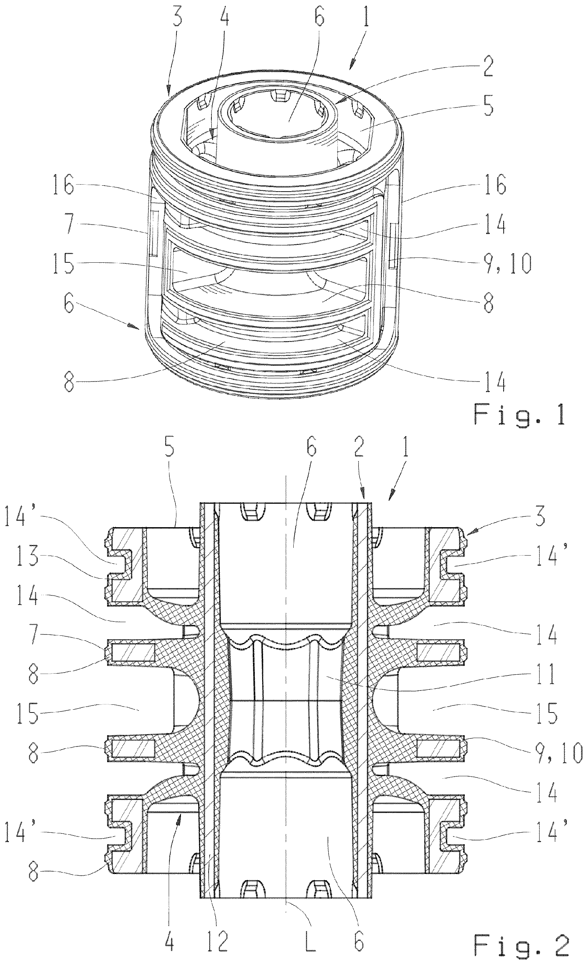

Figur 1 zeigt eine isometrische Ansicht eines hydraulisch dämpfenden Gummilagers 1 für einen Führungslenker einer Vorderachse eines Kraftfahrzeugs gemäß einer Ausführungsform. Das Gummilager 1 umfasst ein im Wesentlichen hohlzylindrisches Innenteil 2 und ein in einem vorbestimmten Abstand dazu angeordnetes Außenteil 3, wobei das Innenteil 2 und das Außenteil 3 über ein dazwischen angeordnetes elastisches Verbindungsteil 4 verbunden sind. Das Verbindungsteil 4 überbrückt einen Zwischenraum 5 zwischen dem Innenteil 2 und dem Außenteil 3 mittels einer Anzahl von Stegen aus Gummi, um die Verbindung zwischen dem Innenteil 2 und dem Außenteil 3 herzustellen. Freie Bereiche 6 innerhalb des Innenteils 2 dienen zum Aufnehmen von über das Gummilager 1 anzubindenden Fahrzeugkomponenten, insbesondere Fahrwerks- oder Karosseriebauteile. Weiterhin kann das Gummilager 1 von einem hier nicht dargestellten Gehäuse umgeben sein. Wie erkennbar ist, ist in dem Außenteil 3 bzw. in dessen äußerer Mantelfläche 7 eine Vielzahl von Kammern und Kanälen ausgebildet, nämlich die ersten und zweiten Fluidkammern 14, 15 sowie zugehörige Verbindungskanäle (Strömungsverbindungen), welche voneinander durch - je nach Wanddicke mehr oder weniger - flexible Kammerwände 8 voneinander getrennt sind, und welche in Zusammenhang mit Figur 2 noch näher beschrieben werden. Teile dieser Kammern und/oder Kanäle können auch in einer Wandung des genannten Gehäuses ausgebildet bzw. innerhalb eines Dämpfungskreislaufs miteinander verbunden sein. An der Mantelfläche 7 ist an den Stegen 9, welche die flexiblen Kammerwände 8 bilden, stirnseitig jeweils eine Abdichtung 10 zum Abdichten des Gummilagers 1 bzw. der Dämpfungskreisläufe gegen eine hier nicht dargestellte Gehäusewand vorgesehen - insbesondere um die einzelnen Kreisläufe voneinander zu trennen.

Fig. 2 ist eine Schnittansicht des in Figur 1 dargestellten Gummilagers 1. Wie hier gut erkennbar ist, ist in dem im Wesentlichen hohlzylindrischen Innenteil 2 ein Abschnitt mit sechseckigem Querschnitt 11 vorgesehen, welcher sich in etwa in der Mitte hinsichtlich der Längsachse L des Gummilagers 1 befindet. Weiterhin ist in der hier gezeigten Schnittansicht erkennbar, dass das Innenteil 2 einen hohlzylindrischen Kern 12 aus Metall aufweist, welcher vollständig von einer Gummischicht umgeben ist. Das Außenteil 3 weist zur Stabilisierung der Kammerwände 8 eine einstückige, komplexe Struktur in Form eines Käfigs 13 aus Metall auf, welcher ebenfalls von einer Gummischicht umgeben ist. Die beiden genannten Gummischichten gehen im Bereich des Zwischenraums 5 ineinander über und bilden so das elastische Verbindungsteil 4.

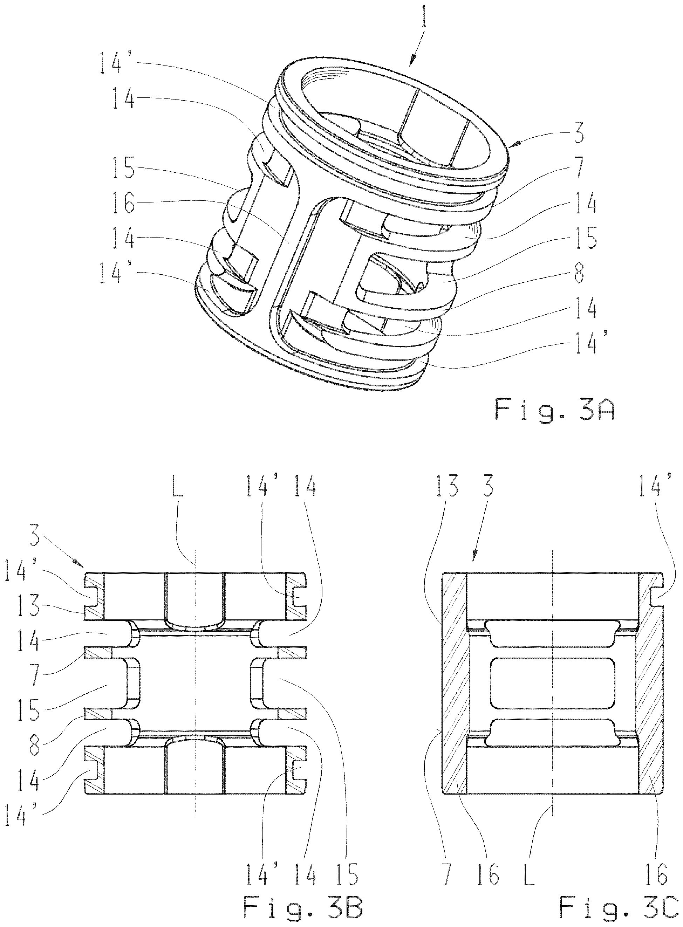

Das Gummilager 1 weist einen ersten hydraulischen Dämpfungskreislauf mit mehreren über eine erste Strömungsverbindung in Fluidkommunikation stehenden ersten Fluidkammern 14 auf, welche eine Dämpfungswirkung in einer vorbestimmten Richtung, nämlich der Hauptdämpfungsrichtung, welche vorzugsweise der Längsrichtung eines Kraftfahrzeugs entspricht, bereitstellen. Die genannten ersten Fluidkammern 14 stehen sowohl bezogen auf eine Seite des Gummilagers 1, d. h. rechts und links der Längsachse L als auch bezogen auf verschiedene Seiten des Gummilagers 1 miteinander in Fluidverbindung, wie insbesondere auch den nachfolgend zu beschreibenden Figuren 3A bis 3E zu entnehmen ist. Teil der genannten Fluidverbindung sind auch die in Figur 2 mit Bezugszeichen 14' bezeichneten Kanäle in den axial endständigen Bereichen des Gummilagers 1. Die Fluidverbindung zwischen den ersten Fluidkammern 14 und den genannten Kanälen 14' kann zumindest teilweise auch über das (nicht gezeigte) Gehäuse des Gummilagers 1 realisiert werden.

Weiterhin weist das Gummilager 1 einen von dem ersten hydraulischen Dämpfungskreislauf getrennten zweiten hydraulischen Dämpfungskreislauf auf, welcher eine Dämpfungswirkung in derselben Richtung wie der erste hydraulische Dämpfungskreislauf vorsieht. Der zweite hydraulische Dämpfungskreislauf ist mittels eines hier nicht dargestellten Ventils in der Strömungsverbindung zwischen zwei zweiten Fluidkammern 15 (Schaltkammern) schaltbar ausgebildet. Dieses Ventil kann in der Wandung des erwähnten Gehäuses vorgesehen sein. Beim Schalten des zweiten hydraulischen Dämpfungskreislaufs auf "steif", d. h. einen Zustand, in dem das Ventil die Strömungsverbindung zwischen den Fluidkammern 15 blockiert und diese fluidtechnisch separiert, bleibt jedoch die Dämpfungswirkung des ersten hydraulischen Dämpfungskreislaufs weitestgehend unbeeinflusst. Um die hierfür erforderliche Entkopplung der Dämpfungswirkungen des ersten und zweiten hydraulischen Dämpfungskreislaufs zu erzielen, sind die Abmessungen und die Geometrie der in Längsrichtung L des Gummilagers 1 benachbarten ersten und zweiten Fluidkammern 14, 15 entsprechend angepasst, u. a. indem die zweiten Fluidkammern 15 jeweils mit einem speziellen, angenähert U-förmigen Querschnitt (siehe Figur 2) und relativ dicken Kammerwänden ausgestattet sind, worauf bereits hingewiesen wurde. Die ersten Fluidkammern 14 können dagegen, wie hier dargestellt, mit einem eher V-förmigen Profil versehen sein.

In diesem Zusammenhang haben umfangreiche Versuche der Anmelderin ergeben, dass die speziell in Figur 2 gezeigte Geometrie der ersten und zweiten Fluidkammern 14, 15 die gewünschte Unabhängigkeit der beiden hydraulischen Dämpfungskreisläufe bewirkt bzw. unterstützt. Es wurde weiter oben bereits darauf hingewiesen, dass die in Längsrichtung L außen angeordneten ersten Fluidkammern 14 im Schnitt gemäß Figur 2 eine modifizierte U-förmige bzw. etwa V-förmige Ausgestaltung aufweisen. Dies liegt insbesondere daran, dass die in Längsrichtung gesehen jeweils äußere Gummiwandung der ersten Fluidkammern 14 im Bezug auf die eigentliche Fluidkammer konvex ausgebildet ist, während die jeweils gegenüberliegende Gummiwandung der ersten Fluidkammern 14 eher konkav ausgeformt ist. Im Bereich der zweiten Fluidkammern 15 sind die entsprechenden Wandungen dagegen beidseitig konkav ausgebildet. Des Weiteren sind die Gummi-Begrenzungswandungen im Bereich der zweiten Fluidkammern 15 relativ dickwandig und damit eher steif ausgebildet, so dass bei einer Steifschaltung des Gummilagers im Bereich des zweiten Dämpfungskreislaufs (umfassend die zweiten Fluidkammern 15) nur eine relativ geringe Beeinflussung des ersten Dämpfungskreislaufs (umfassend Fluidkammern 14) bewirkt ist. Zudem kann eine erhöhte Steifigkeit der Trennwände zwischen zweitem und erstem Dämpfungskreislauf durch eine erhöhte Nachgiebigkeit der konvexen, äußeren Begrenzungswände der ersten Fluidkammern 14 zumindest teilweise ausgeglichen werden.

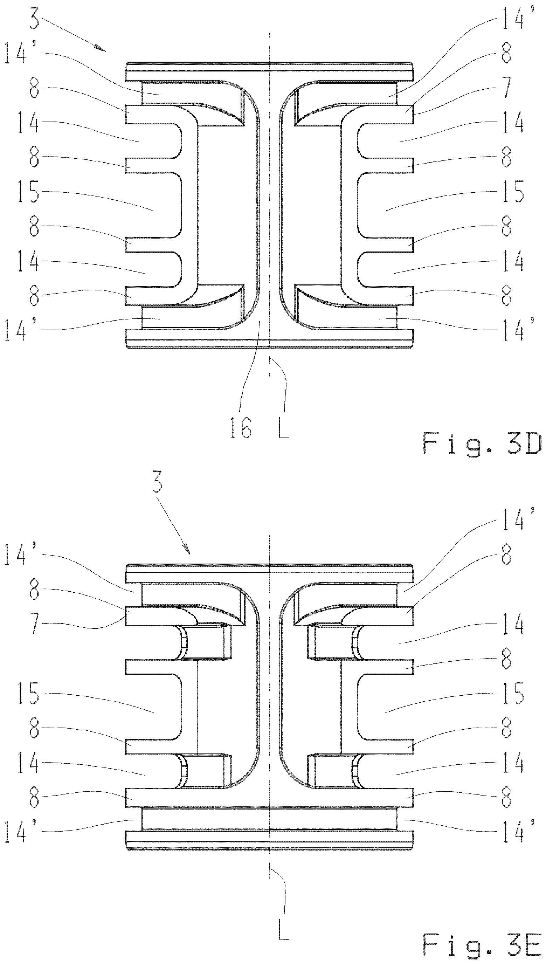

Der erste hydraulische Dämpfungskreislauf weist eine unterschiedliche Dämpfungsfrequenz zu dem zweiten hydraulischen Dämpfungskreislauf auf. Beispielsweise kann der erste hydraulische Dämpfungskreislauf mit den ersten Fluidkammern 14 und dem relativ langen und dünn ausgebildeten Kanal 14' zur Strömungsverbindung der ersten Fluidkammern 14 einen Frequenzbereich von 16 bis 17 Hz abdecken, wohingegen der zweite hydraulische Dämpfungskreislauf mit den eher breiter ausgebildeten Fluidkammern 15 und einem relativ kurzen und breiten Kanal zur Strömungsverbindung der zweiten Fluidkammern 15 einen Frequenzbereich um ungefähr 110 Hz abdeckt, wobei die genannten Frequenzwerte nicht einschränkend zu verstehen sind. Es sei diesbezüglich auch auf die Darstellungen des Außenteils 3 in den Figuren 3A bis 3E verwiesen. Dort zeigen insbesondere die Figuren 3A, 3B und 3E deutlich die Verbindung der ersten Fluidkammern 14 und der zugehörigen mäanderförmigen Kanäle 14' untereinander, wodurch sich der bereits erwähnte, relativ lange erste hydraulische Dämpfungskreislauf ergibt.

Fig. 3A bis 3E zeigen verschiedene weitere Ansichten eines Außenteils 3 eines Gummilagers gemäß einer Ausführungsform. Figur 3A zeigt eine isometrische Ansicht des Außenteils 3, Figuren 3B und 3C zeigen jeweils Schnittansichten des Außenteils um 90° gedreht um die Achse L, und Figuren 3D und 3E zeigen jeweils weitere Seitenansichten des Außenteils 3 in verschiedenen Stellungen hinsichtlich der Achse L. Wie in Figur 3C erkennbar ist, weist das Außenteil 3 zwei Längsstege 16 aus Metall auf, welche zu Abdichtzwecken gegenüber dem Gehäuse außen gummiert sind. Die um 180° versetzt angeordneten zwei Längsstege 16 teilen die Mantelfläche 7 des Außenteils 3 in zwei Hälften auf, welche im Wesentlichen spiegelbildlich ausgebildet sind. Auf jeder der zwei Hälften sind jeweils zwei äußere erste Fluidkammern 14 angeordnet, in deren Mitte jeweils eine innere zweite Fluidkammer 15 angeordnet ist. So sind an der Mantelfläche 7 des Außenteils 3 insgesamt zwei zweite innere Fluidkammern 15 und vier erste äußere Fluidkammern 14 vorgesehen, welche jeweils durch getrennte Kanäle, insbesondere die Kanäle 14', miteinander verbunden sind. Dies ist insbesondere den Darstellungen in den Figuren 3A, 3B und 3E gut zu entnehmen. Die zweiten Fluidkammern 15 sind durch die umlaufenden Kammerwände 8, die beispielsweise auch der Figur 1 gut zu entnehmen sind, fluidtechnisch voneinander und von den ersten Fluidkammern 14 getrennt. Hier erfolgt die Strömungsverbindung vollständig über das (nicht dargestellte) Gehäuse des Gummilagers. Bezogen auf den ersten Dämpfungskreislauf ist die Verwendungssituation komplexer. Hier stehen die ersten Fluidkammern 14 auf jeder Seite beispielsweise gemäß Figur 3A oder Figur 3E miteinander in Fluidverbindung. Gemäß beispielsweise in Figur 3E existiert außerdem eine Fluidverbindung dieser beiden Kammern über den in der Zeichnung oben dargestellten Kanal 14' mit den entsprechenden Fluidkammern auf der anderen Seite der Anordnung. Figur 3D zeigt die bereits erwähnte fluidtechnische Trennung der beiden Hälften des Außenteils 3 mittels des durchgängigen Längsstegs 16. Dagegen ist der andere Längssteg 16 gemäß Figur 3E nicht vollständig durchgängig, so dass mittels des erwähnten Kanals 14' ein in dem ersten Dämpfungskreislauf befindliches Fluid auf die andere Seite der Anordnung gelangen kann (vgl. Figur 3A und Figur 3C). Gemäß der Darstellung in Figur 3D sind auf dieser Seite nur die Kanäle 14' des ersten Dämpfungskreislaufs miteinander in Fluidverbindung. Die ersten Fluidkammern 14 sind voneinander und von den genannten Kanälen 14' getrennt (Kammerwände 8). Dies entspricht einem Blick auf die (nicht gezeigte) Rückseite der Darstellung in Figur 3A. Gemäß Figur 3E, welche den Blick auf die Vorderseite der Darstellung in Figur 3A zeigt, besteht die bereits mehrfach erwähnte Fluidverbindung zwischen den ersten Fluidkammern 14 und dem unteren Kanal 14'. Das in dem ersten Dämpfungskreislauf befindliche Fluid gelangt also über den Kanal 14' von der einen Seite der Anordnung auf die andere Seite der Anordnung und wird dort auf die mehrfach erwähnten ersten Fluidkammern 14 verteilt. Auf diese Weise ergibt sich ein relativ langer, mäanderförmiger Dämpfungskreislauf mit relativ hohem Fluidwiderstand - in Abgrenzung zu dem zweiten Dämpfungskreislauf mit relativ großvolumigen und direkt miteinander verbundenen zweiten Fluidkammern 15. Bei entsprechender Anpassung der Abmessungen der einzelnen Fluidkammern und Kanäle zueinander können die Resonanzlage und der Verlustwinkel des Gummilagers angepasst werden.

### Bezugszeichen

- 1: Gummilager
- 2: Innenteil
- 3: Außenteil
- 4: Verbindungsteil
- 5: Zwischenraum
- 6: freier Bereich
- 7: Mantelfläche
- 8: Kammerwand
- 9: Steg
- 10: Abdichtung
- 11: Querschnitt
- 12: Kern aus Metall
- 13: Käfig
- 14: erste Fluidkammer
- 14': Kanal
- 15: zweite Fluidkammer
- 16: Längssteg

## Patentansprüche

1. Hydraulisch dämpfendes Gummilager (1) mit einem im Wesentlichen hohlzylindrischen Innenteil (2) und mit einem in einem vorbestimmten Abstand dazu angeordneten Außenteil (3), welches Außenteil (3) mit dem Innenteil (2) über ein zwischen dem Innenteil (2) und dem Außenteil (3) angeordnetes elastisches Verbindungsteil (4) verbunden ist, und mit einem ersten hydraulischen Dämpfungskreislauf mit zumindest zwei über eine erste Strömungsverbindung in Fluidkommunikation stehenden ersten Fluidkammern (14) mit einer Dämpfungswirkung in einer vorbestimmten Richtung, wobei das Gummilager (1) einen zweiten hydraulischen Dämpfungskreislauf aufweist, welcher eine Dämpfungswirkung in derselben Richtung wie der erste hydraulische Dämpfungskreislauf vorsieht, wobei der zweite hydraulische Dämpfungskreislauf zumindest zwei zweite Fluidkammern (15) aufweist, welche über eine zweite Strömungsverbindung in Fluidkommunikation stehen, **dadurch gekennzeichnet, dass** jeweils eine der zumindest zwei zweiten Fluidkammern (15) an der Mantelfläche (7) des Gummilagers (1) zwischen zwei ersten Fluidkammern (14) angeordnet ist.

2. Hydraulisch dämpfendes Gummilager (1) gemäß Anspruch 1, **dadurch gekennzeichnet, dass** der erste hydraulische Dämpfungskreislauf in einer Mantelfläche des Gummilagers (1), insbesondere in einer Mantelfläche (7) des Außenteils (3), und/oder in einem Gehäuse, in welchem das Gummilager (1) aufgenommen ist, ausgebildet und/oder fluidtechnisch geschlossen ist.

3. Hydraulisch dämpfendes Gummilager (1) gemäß Anspruch 1 oder 2, **dadurch gekennzeichnet, dass** der zweite hydraulische Dämpfungskreislauf in der Mantelfläche des Gummilagers (1), insbesondere in der Mantelfläche (7) des Außenteils (3), und/oder in einem Gehäuse, in welchem das Gummilager (1) aufgenommen ist, ausgebildet und/oder fluidtechnisch geschlossen ist.

4. Hydraulisch dämpfendes Gummilager (1) gemäß einem der Ansprüche 1 bis 3, **dadurch gekennzeichnet, dass** zumindest einer von den ersten und zweiten hydraulischen Dämpfungskreisläufen, insbesondere der zweite hydraulische Dämpfungskreislauf, schaltbar ist, wobei der andere von den ersten und zweiten hydraulischen Dämpfungskreisläufen dabei in seiner Dämpfungswirkung im Wesentlichen unbeeinflusst bleibt, insbesondere hinsichtlich der Frequenzabhängigkeit der Dämpfungswirkung.

5. Hydraulisch dämpfendes Gummilager (1) gemäß einem der Ansprüche 1 bis 4, **dadurch gekennzeichnet, dass** der erste hydraulische Dämpfungskreislauf und der zweite hydraulische Dämpfungskreislauf unterschiedliche Frequenzabhängigkeiten der Dämpfungswirkung aufweisen, insbesondere unterschiedliche Frequenzen der maximalen Dämpfungswirkung.

6. Hydraulisch dämpfendes Gummilager (1) gemäß einem der Ansprüche 1 bis 5, **dadurch gekennzeichnet, dass** in dem zweiten Dämpfungskreislauf ein schaltbares Ventil angeordnet ist, welches insbesondere die zweite Strömungsverbindung sperrt, um die Gesamtsteifigkeit des Gummilagers (1) selektiv zu erhöhen.

7. Hydraulisch dämpfendes Gummilager gemäß einem der Ansprüche 1 bis 6, **dadurch gekennzeichnet, dass** die zumindest zwei zweiten Fluidkammern (15) und die zumindest zwei ersten, insbesondere vier erste, Fluidkammern (14) jeweils mit einem U-förmigen Querschnitt ausgebildet sind.

8. Hydraulisch dämpfendes Gummilager gemäß Anspruch 1 bis 7, **dadurch gekennzeichnet, dass** der erste Dämpfungskreislauf und der zweite Dämpfungskreislauf unterschiedliche Fluidwiderstände aufweisen, vorzugsweise unterschiedliche Längen und/oder Querschnittswerte und/oder Querschnittsformen.

9. Hydraulisch dämpfendes Gummilager (1) gemäß einem der Ansprüche 1 bis 8, **dadurch gekennzeichnet, dass** das Innenteil (2) einen hohlzylindrischen Kern (12) aus Metall aufweist, welcher von einer Gummischicht umgeben ist.

10. Hydraulisch dämpfendes Gummilager (1) gemäß einem der Ansprüche 1 bis 9, **dadurch gekennzeichnet, dass** das Außenteil (3) einen Käfig (13) aus Metall aufweist, welcher von einer Gummischicht umgeben ist.

11. Hydraulisch dämpfendes Gummilager (1) gemäß Anspruch 9 und 10, **dadurch gekennzeichnet, dass** die Gummischichten das Verbindungsteil (4) bilden.

12. Hydraulisch dämpfendes Gummilager (1) gemäß Anspruch 10 oder 11, **dadurch gekennzeichnet, dass** einzelne Elemente des Käfigs (13) metallische Versteifungen für die ersten und zweiten Fluidkammern (14, 15) bilden.

13. Hydraulisch dämpfendes Gummilager (1) gemäß einem der Ansprüche 10 bis 12, **dadurch gekennzeichnet, dass** der Käfig (13) einteilig ausgebildet ist.

## Claims

1. Hydraulically damping rubber bearing (1) having an essentially hollow-cylindrical inner part (2) and having an outer part (3) which is arranged at a predefined distance therefrom, the outer part (3) being connected to the inner part (2) via an elastic connection part (4) arranged between the inner part (2) and the outer part (3), and having a first hydraulic damping circuit with at least two first fluid chambers (14) which are in fluid communication via a first flow connection and which have a damping effect in a predefined direction, wherein the rubber bearing (1) has a second hydraulic damping circuit which provides a damping effect in the same direction as the first hydraulic damping circuit, wherein the second hydraulic damping circuit has at least two second fluid chambers (15) which are in fluid communication via a second flow connection, **characterised in that** in each case one of the at least two second fluid chambers (15) is arranged on the lateral surface (7) of the rubber bearing (1) between two first fluid chambers (14).

2. Hydraulically damping rubber bearing (1) according to claim 1, **characterised in that** the first hydraulic damping circuit is formed and/or fluidly closed in a lateral surface of the rubber bearing (1), in particular in a lateral surface (7) of the outer part (3), and/or in a housing in which the rubber bearing (1) is held.

3. Hydraulically damping rubber bearing (1) according to claim 1 or 2, **characterised in that** the second hydraulic damping circuit is formed and/or fluidly closed in the lateral surface of the rubber bearing (1), in particular in the lateral surface (7) of the outer part (3), and/or in a housing in which the rubber bearing (1) is held.

4. Hydraulically damping rubber bearing (1) according to any one of claims 1 to 3, **characterised in that** at least one of the first and second hydraulic damping circuits, in particular the second hydraulic damping circuit, is switchable, wherein at the same time the other of the first and second hydraulic damping circuits remains essentially unaffected in its damping effect, in particular with regard to the frequency dependence of the damping effect.

5. Hydraulically damping rubber bearing (1) according to any one of claims 1 to 4, **characterised in that** the first hydraulic damping circuit and the second hydraulic damping circuit have different frequency dependencies of the damping effect, in particular different frequencies of the maximum damping effect.

6. Hydraulically damping rubber bearing (1) according to any one of claims 1 to 5, **characterised in that** a switchable valve is arranged in the second damping circuit, this switchable valve in particular blocking the second flow connection, in order to selectively increase the overall rigidity of the rubber bearing (1).

7. Hydraulically damping rubber bearing according to any one of claims 1 to 6, **characterised in that** the at least two second fluid chambers (15) and the at least two first, in particular four first, fluid chambers (14) are each formed with a U-shaped cross-section.

8. Hydraulically damping rubber bearing according to any one of claims 1 to 7, **characterised in that** the first damping circuit and the second damping circuit have different fluid resistances, preferably different lengths and/or cross-section values and/or cross-section shapes.

9. Hydraulically damping rubber bearing (1) according to any one of claims 1 to 8, **characterised in that** the inner part (2) has a hollow-cylindrical core (12) consisting of metal which is surrounded by a rubber layer.

10. Hydraulically damping rubber bearing (1) according to any one of claims 1 to 9, **characterised in that** the outer part (3) has a cage (13) consisting of metal which is surrounded by a rubber layer.

11. Hydraulically damping rubber bearing (1) according to claims 9 and 10, **characterised in that** the rubber layers form the connection part (4).

12. Hydraulically damping rubber bearing (1) according to claim 10 or 11, **characterised in that** individual elements of the cage (13) form metal reinforcements for the first and second fluid chambers (14, 15).

13. Hydraulically damping rubber bearing (1) according to any one of claims 10 to 12, **characterised in that** the cage (13) is formed as one piece.

## Revendications

1. Palier en caoutchouc (1) à amortissement hydraulique avec une partie interne (2) globalement cylindrique creuse et avec une partie externe (3) disposée à une distance prédéterminée par rapport à celle-ci, cette partie externe (3) étant reliée avec la partie interne (2) par l'intermédiaire d'une partie de liaison élastique (4) disposée entre la partie interne (2) et la partie externe (3), et avec un premier circuit d'amortissement hydraulique avec au moins deux premières chambres de fluide (14) en communication fluidique par l'intermédiaire d'une première liaison d'écoulement, avec une action d'amortissement dans une direction prédéterminée, le palier en caoutchouc (1) comprenant un deuxième circuit d'amortissement hydraulique qui présente une action d'amortissement dans la même direction que le premier circuit hydraulique, le deuxième circuit d'amortissement hydraulique comprenant au moins deux deuxièmes chambres de fluide (15), qui sont en communication fluidique par l'intermédiaire d'une deuxième liaison d'écoulement, **caractérisé en ce qu'**une des au moins deux deuxièmes chambres de fluide (15) est disposée sur la surface d'enveloppe (7) du palier en caoutchouc (1) entre deux premières chambres de fluide (14).

2. Palier en caoutchouc (1) à amortissement hydraulique selon la revendication 1, **caractérisé en ce que** le premier circuit d'amortissement hydraulique est réalisé et/ou fermé fluidiquement dans une surface externe du palier en caoutchouc (1), plus particulièrement dans une surface d'enveloppe (7) de la partie externe (3) et/ou dans un boîtier dans lequel le palier en caoutchouc (1) est logé.

3. Palier en caoutchouc (1) à amortissement hydraulique selon la revendication 1 ou 2, **caractérisé en ce que** le deuxième circuit d'amortissement hydraulique est réalisé et/ou fermé fluidiquement dans une surface externe du palier en caoutchouc (1), plus particulièrement dans la surface d'enveloppe (7) de la partie externe (3) et/ou dans un boîtier dans lequel le palier en caoutchouc (1) est logé.

4. Palier en caoutchouc (1) à amortissement hydraulique selon l'une des revendications 1 à 3, **caractérisé en ce qu'**au moins un des premier et deuxième circuits d'amortissement hydrauliques, plus particulièrement le deuxième circuit d'amortissement hydraulique, peut être commuté, l'autre des premier et deuxième circuits d'amortissement hydrauliques restant globalement non influencé dans son action d'amortissement, plus particulièrement en ce qui concerne la dépendance à la fréquence de l'action d'amortissement.

5. Palier en caoutchouc (1) à amortissement hydraulique selon l'une des revendications 1 à 4, **caractérisé en ce que** le premier circuit d'amortissement hydraulique et le deuxième circuit d'amortissement hydraulique présentent des dépendances à la fréquence de l'action d'amortissement différentes, plus particulièrement des fréquences de l'action d'amortissement maximale différentes.

6. Palier en caoutchouc (1) à amortissement hydraulique selon l'une des revendications 1 à 5, **caractérisé en ce que**, dans le deuxième circuit d'amortissement, est disposée une soupape commutable qui bloque plus particulièrement la deuxième liaison d'écoulement afin d'augmenter de manière sélective la rigidité totale du palier en caoutchouc (1).

7. Palier en caoutchouc (1) à amortissement hydraulique selon l'une des revendications 1 à 6, **caractérisé en ce que** les au moins deux deuxièmes chambres de fluide (15) et les au moins deux premières, plus particulièrement les quatre premières chambres de fluide (14) sont réalisées chacune avec une section transversale en forme de U.

8. Palier en caoutchouc (1) à amortissement hydraulique selon l'une des revendications 1 à 7, **caractérisé en ce que** le premier circuit d'amortissement et le deuxième circuit d'amortissement présentent différentes résistances aux fluides, de préférence des longueurs et/ou des valeurs de sections transversales et/ou des formes de sections transversales différentes.

9. Palier en caoutchouc (1) à amortissement hydraulique selon l'une des revendications 1 à 8, **caractérisé en ce que** la partie interne (2) comprend un noyau cylindrique creux (12) en métal, qui est entouré d'une couche de caoutchouc.

10. Palier en caoutchouc (1) à amortissement hydraulique selon l'une des revendications 1 à 9, **caractérisé en ce que** la partie externe (3) comprend une cage (13) en métal qui est entourée d'une couche de caoutchouc.

11. Palier en caoutchouc (1) à amortissement hydraulique selon la revendication 9 et 10, **caractérisé en ce que** les couches de caoutchouc constituent la partie de liaison (4).

12. Palier en caoutchouc (1) à amortissement hydraulique selon la revendication 10 ou 11, **caractérisé en ce que** les différents éléments de la cage (13) constituent des rigidifications métalliques pour les premières et deuxièmes chambres de fluide (14, 15).

13. Palier en caoutchouc (1) à amortissement hydraulique selon l'une des revendications 10 à 12, **caractérisé en ce que** la cage (13) est formée d'une seule pièce.
